# EUROPEAN PATENT SPECIFICATION

(11) **EP 0 539 899 B1**
(45) Date of publication and mention of the grant of the patent: **21.12.1994**
(21) Application number: 92118264.8
(22) Date of filing: 26.10.1992
(51) Int. Cl.: B60T 8/48, B60T 13/14

(54) **Brake fluid pressure control device**
Bremsdruckregeleinrichtung
Dispositif de contrôle de pression de fluide de freinage

(30) Priority: 30.10.1991 JP 284876/91
(43) Date of publication of application: 05.05.1993
(73) Proprietor: SUMITOMO ELECTRIC INDUSTRIES, LIMITED, Osaka 541 (JP)
(72) Inventor: Takata, Koji, c/o Itami Works, Itami-shi, Hyogo (JP); Yoshino, Masato, c/o Itami Works, Itami-shi, Hyogo (JP)
(74) Representative: Schieschke, Klaus, Dipl.-Ing.

(56) References cited:
- DE-A- 3 831 426
- DE-A- 3 940 177
- DE-A- 4 001 421
- DE-A- 4 017 700
- DE-A- 4 028 552
- DE-U- 8 913 565

## Description

The present invention relates to a brake fluid pressure control device of a simple structure and having both the functions of antilock and traction control.

As the simplest antilock device is known the so-called recirculating type which comprises a wheel brake fluid pressure control valve including a discharge valve provided in the main fluid passage extending from the master cylinder to each wheel brake, a discharged fluid reservoir for temporarily storing the brake fluid discharged from the discharge valve, and a pump for pumping the brake fluid out of the discharged fluid reservoir and returning it to the main fluid passage. If it is desired to add traction control function to this device, the structure of the entire device can be simplified most effectively by using the circulation pump for the antilock as a pressure source for the traction control.

In order to employ such a structure, brake fluid has to be supplied to the inlet port of the pump. This can be done in several known ways.

These known ways are classified into two types. In one type, a fluid supply passage is provided so as to extend directly from the reservoir for the master cylinder to the pump inlet port. In the other type, the supply passage is provided to branch from the main passage connecting the master cylinder outlet port to each wheel brake. Of these two types, the latter is advantageous in view of easy mounting on a vehicle and the non-necessity of returning redundant brake fluid to the reservoir for the master cylinder through its inlet port.

The latter method in which the fluid supply passage branches from the main fluid passage requires a traction control changeover valve for checking a fluid flow from the flow return point from the pump toward the master cylinder during traction control and a shutoff valve for checking a fluid flow from the fluid supply passage toward the discharged fluid reservoir during normal braking (when the master cylinder pressure is applied). As the shutoff valve, a solenoid or a pressure-responsive valve is ordinarily used such a system is for instance disclosed in DE-A-4 001 421.

But, a solenoid valve is not only relatively expensive. It also has a problem in that if the valve were not returned to its inoperative position as soon as the brake pedal is depressed during the traction control, the brake fluid in the master cylinder would flow into the discharged fluid reservoir, thereby making it impossible to get a sufficient brake force by depressing the brake pedal. In this state, the subsequent antilock control function may be lost, too. Thus, it is necessary to increase the reliability of the electric system including the brake switch. This requires more cost than it appears.

A pressure-responsive valve, which requires a cylinder/piston assembly for driving the valve body in response to the pressure, is also unsatisfactory in cost.

It is therefore an object of the present invention to provide a simple and low-cost brake fluid pressure control device of the type described above.

The characterizing feature of the present invention consists in that the piston in the discharged fluid reservoir, which in itself is an indispensable component, is used as a valve body driving means and a stroke responsive type check valve is provided to check a fluid flow from the fluid supply passage toward the discharged fluid reservoir when the amount of the brake fluid in the discharged fluid reservoir is larger than a predetermined level. This valve is used as a shutoff valve.

The shutoff valve can be used either in a device of the first type in which the traction control changeover valve is provided downstream of the branch point between the main fluid passage and the fluid supply passage so that the fluid supply passage always communicates with the main fluid passage or in a device of the second type in which the traction control changeover valve is a three-port two-position valve provided at the branch point between the fluid supply passage and the main fluid passage so that the fluid supply passage communicates with the main fluid passage only during traction control.

In either of the above two types of devices, its performance can be improved by providing an intermediate fluid reservoir at such a position that it communicates with the fluid supply passage at least during traction control.

Since the stroke responsive type check valve is driven by the piston in the discharged fluid reservoir, which is an essential element of the reservoir, its structure is simple and its cost is low. Because of its simple structure, its reliability is high compared with a solenoid valve or a pressure-responsive valve.

The intermediate fluid reservoir serves as a brake fluid supply source and thus helps to increase the brake fluid supply capacity to the pump. This serves to quickly increase the brake fluid pressure at the early stage of traction control.

Other features and objects of the present invention will become apparent from the following description taken with reference to the accompanying drawings, in which:
Fig. 1 is a circuit diagram of one example of the device according to the present invention; and
Fig. 2 is a circuit diagram of another embodiment.

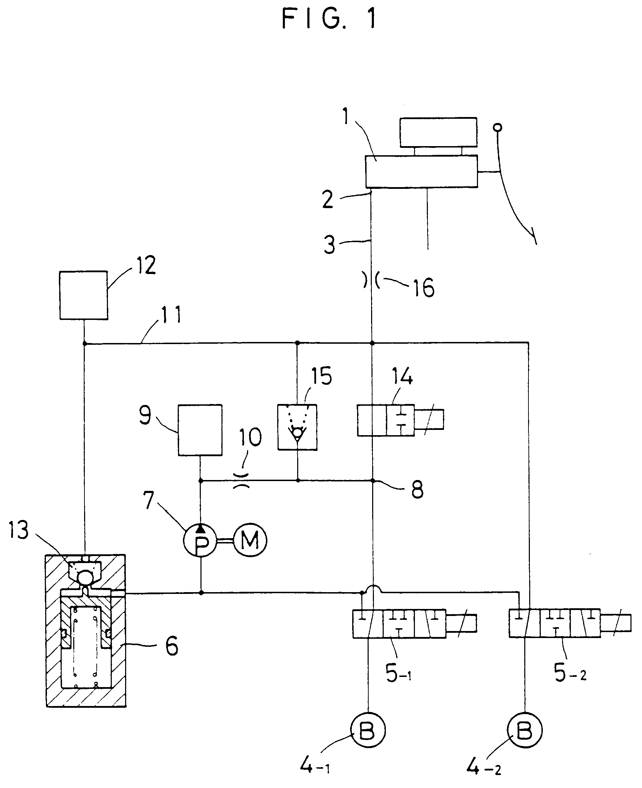

Fig. 1 shows an example in which the main passage and the supply passage are normally in communication with each other and the traction control changeover valve is a two-port two-position valve provided between the point at which the supply passage branches from the main passage and the flow return point from the pump.

A master cylinder 1 (a booster of any type may be attached thereto) has two outlet ports. We shall describe hereinafter only one line of the two lines, because the same explanation or discussion is applicable to both lines.

Wheel brake fluid pressure control valves 5-1, 5-2 are provided in the respective main fluid passages connecting the outlet port 2 to wheel brakes 4-1, 4-2. The wheel brake fluid pressure control valves may be a three-position type (as shown in Fig. 1) having pressure-increase, pressure-hold and pressure-decrease positions or a two-position type having no pressure-hold position. In many cases, a check valve (not shown) is attached to each of the control valves in parallel therewith to allow the brake fluid pressure to drop quickly when the pressure on the brake pedal is relaxed during antilock control.

When the brake fluid pressure control valves 5-1 and 5-2 are in their discharge positions, the wheel brakes 4-1 and 4-2 are in communication with a discharged fluid reservoir 6.

The pump 7 pumps the brake fluid out of the discharged fluid reservoir 6 and returns it to a flow return point 8 of the main fluid passage. In order to prevent the pulsating flow of the fluid discharged from the pump 7, a buffer fluid reservoir 9 and a throttle 10 are used in combination.

Described above is the basic structure of a recirculating type antilock brake fluid pressure control device. In order to add traction control function to this device, the following elements are added.

A supply passage 11 is provided that branches from the main fluid passage at a point upstream of the flow return point 8 and extends to the discharged fluid reservoir 6.

The discharged fluid reservoir 6 is provided with a stroke responsive type check valve 13 which serves as a shutoff valve to prevent the flow of fluid from the fluid supply passage 11 to the discharged fluid reservoir 6 when the amount of brake fluid in the reservoir 6 exceeds a predetermined level and to allow the passage of fluid only while the amount of brake fluid in the reservoir is below the predetermined level.

A traction control changeover valve 14 is provided between the flow return point 8 and the abovesaid branch point to prevent the pressurized fluid from flowing back into the master cylinder during the traction control. Also, in order to allow backward fluid flow toward the intermediate reservoir when the pump discharge pressure has increased excessively, a high-pressure (corresponding to the upper limit of the fluid pressure necessary for the traction control, e.g. 100 bar) relief valve 15 is provided in parallel with the changeover valve 14.

Further, in this embodiment, in order to further improve the performance of the device, there is provided an intermediate fluid reservoir 12 at such a point that it always communicates with the fluid supply passage 11. The intermediate fluid reservoir 12 may be a simple fluid chamber similar to the buffer fluid reservoir 9. But, for higher fluid supply capacity to the pump, it should preferably be provided with a volume control means for reducing the volume of the intermediate fluid reservoir when the internal fluid pressure drops below the atmospheric pressure, thereby keeping the internal pressure not much lower than the atmospheric pressure. Especially preferable volume control means is a diaphragm having a slight self-restoring force or a piston without a return spring, because, with these means, it is fairly easy for the intermediate fluid reservoir to recover its original volume at the completion of the traction control, before the brake fluid flows back into the master cylinder reservoir.

Also, by providing the intermediate fluid reservoir at such a position that it communicates with the main fluid passage 3 during antilock control, the pulsating flow from the pump can be further restrained. Namely, a throttle 16, which may be added as long as it would not hinder the normal braking performance, serves in cooperation with the intermediate fluid reservoir 12, to strengthen the buffering effect of the combination of the buffer fluid reservoir 9 and the throttle 10.

The wheel brake 4-2 at the non-driven wheel side and the brake fluid pressure control valve 5-2 may be connected to the line branching from the point downstream of the traction control changeover valve 14 in the same manner as the wheel brake 4-1 and its brake fluid pressure control valve 5-1 at the driven wheel side. But preferably, they should be connected to a line branching from a point upstream of the valve 14. This is because, with this arrangement, it is not necessary to keep the control valve 5-2 activated during the traction control and the pressure on the non-driven wheel brakes can be increased instantly upon depression of the brake pedal. Of course, if the brake 4-2 is also a brake for the driven wheel, 4-2 and 5-2 must be arranged in the same manner as 4-1 and 5-1, i.e. downstream of traction control changeover valve 14.

When providing the stroke responsive type check valve 13 at the position shown in Fig. 1, the amount of fluid necessary for moving the piston in the discharged fluid reservoir 6 from its stroke end to the position in which the check valve is closed increases the initial dead stroke of the brake pedal. Thus, the piston stroke from the stroke end to the valve closing position should be made as short as possible.

The stroke responsive type check valve 13 has a critical pressure that is determined by the balance between the effective sectional area of the valve body and the force of the return spring in the discharged fluid reservoir 6. Thus, in the structure shown in Fig. 1, if the brake fluid in the discharged fluid reservoir 6 is completely pumped out by the pump 7 during the antilock control and if the master cylinder pressure is lower than the critical pressure, the fluid supply passage 11 and the discharged fluid reservoir 6, which have been shut off from each other, would communicate again. Thus, the pump will keep discharging fluid, instead of running idle, with a discharge pressure which is equal to the master cylinder pressure at that moment.

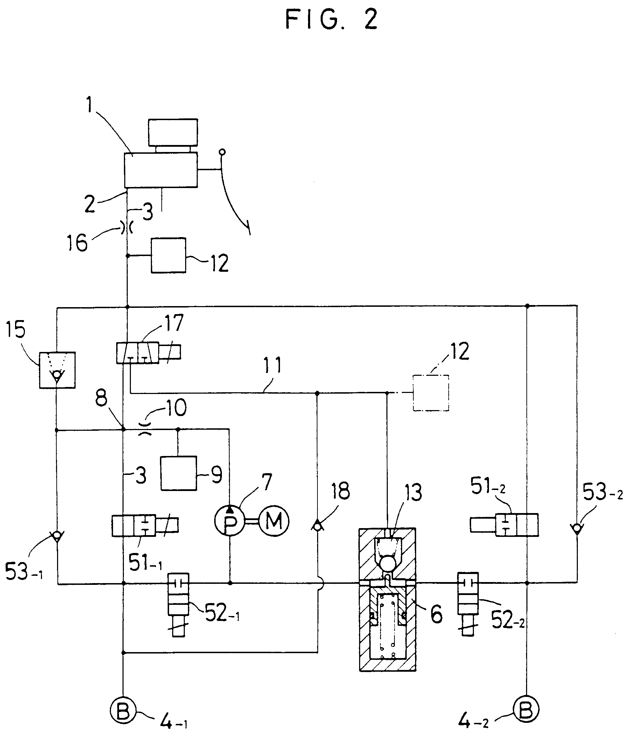

But, the abovesaid critical pressure would not rise too high. As the stroke responsive type check valve 13 has to be provided downstream of the intermediate fluid reservoir 12, the valve body of the valve 13 has to have a considerably large effective sectional area in order to keep sufficiently low flow line resistance in the valve which corresponds to the fluid intake resistance of the pump 7. On the other hand, the force of the return spring has to be sufficiently small because the lowest possible pressure reduction level of the brake fluid pressure control device is determined by the fluid pressure in the discharged fluid reservoir 6 which is in turn determined by the sectional area of the discharged fluid reservoir and the force of the return spring. As far as the master cylinder pressure is maintained at such a level, there will be no practical problem even if the pump fails to get into an idling state. But the structure of Fig. 2 can solve this problem as well as the problem of the initial dead stroke.

In Fig. 2, the traction control changeover valve is a three-port two-position changeover valve 17 provided at the branch point between the main fluid passage 3 and the fluid supply passage 11.

With this arrangement, when the changeover valve 17 is in its inoperative position, it shuts the fluid supply passage 11 from the main fluid passage 3. In other words, the fluid supply passage 11 communicates with the main fluid passage only during traction control. This prevents the dead stroke of the brake pedal, which occurs only if the check valve is arranged in the manner as shown in Fig. 1. Also, the pump can get reliably into an idling state even if the master cylinder pressure is lower than the critical pressure.

Fig. 2 shows the driven wheel brake control valve 5-1 and the non-driven wheel brake control valve 5-2 as being separated, respectively, into three parts 51-1, 52-1 and 53-1 and 51-2, 52-2 and 53-2, of which 53-1 and 53-2 are check valves that are not shown in Figs. 1 and 3.

Also, by providing a circuit extending from the fluid supply passage 11 to the wheel brake 4-1 and providing a check valve 18 in this circuit, the wheel brake fluid pressure can be increased quickly even if the master cylinder is pushed in during traction control without the need of switching the changeover valve 17 to the pressure re-increase position.

Further, as shown in Fig. 2, by chain line, the intermediate fluid reservoir 12 may be provided not in the main fluid passage but in the fluid supply passage. Also, the relief valve 15 may be provided not between the flow return point and the main fluid passage but between the flow return point and the fluid supply passage.

If the intermediate fluid reservoir is provided at a position shown by chain line, it is necessary that the intermediate fluid reservoir recover its initial volume at the end of traction control while the main fluid passage and the fluid supply passage are still in communication through the traction control changeover valve 17.

By providing the check valve 18, the restoring timing of the changeover valve 17 can be delayed properly to ensure the intermediate fluid reservoir recover its initial volume reliably.

## Claims

1. A brake fluid pressure control device comprising:
a wheel brake fluid pressure control valve (5-1, 5-2) including at least a discharge valve and provided in a main fluid passage (3) extending from a master cylinder (1) to wheel brakes (4-1, 4-2);
a discharged fluid reservoir (6) for temporarily storing the brake fluid discharged from said discharge valve;
a pump (7) for pumping the brake fluid out of said discharged fluid reservoir (6) and returning it to the main fluid passage;
a fluid supply passage (11) branching from the main fluid passage at a point upstream of a flow return point (8) from said pump (7) and extending to said discharged fluid reservoir (6);
a traction control changeover valve (14, 17) for checking a fluid flow from said flow return point (8) toward the master cylinder (1) during traction control; and
a shutoff valve (13) for checking a fluid flow from said master cylinder (1) to said discharged fluid reservoir (6) through said fluid supply passage (11) while the pressure in the master cylinder (1) is being applied;
characterized in that said shutoff valve (13) is in the form of a stroke responsive type check valve for checking a fluid flow from said fluid supply passage (11) toward said discharged fluid reservoir (6) if the amount of the brake fluid in said discharged fluid reservoir (6) exceeds a predetermined level.

2. A brake fluid pressure control device as claimed in claim 1, wherein said fluid supply passage (11) and said shutoff valve (13) are provided at such a position that they always communicate with said main fluid passage.

3. A brake fluid pressure control device as claimed in claim 1, wherein said traction control changeover valve (14) is provided at a location where said fluid supply passage (11) branches from said main fluid passage (3), said changeover valve being in the form of a three-port two-position valve for selectively directing the fluid flow from the master cylinder (1) toward said flow return point (8) from said pump or toward the fluid supply passage (11), so as to keep said fluid supply passage (11) and said shutoff valve (13) not in communication with said main fluid passage when said traction control changeover valve (14) is in its inoperative position.

4. A brake fluid pressure control device as claimed in any of claims 1-3, further comprising an intermediate fluid reservoir (12) provided at a location upstream of said shutoff valve (13), i.e. nearer to the master cylinder (1) than said shutoff valve (13) is, said intermediate fluid reservoir (12) being adapted to communicate with said fluid supply passage (11) at least during traction control.

5. A brake fluid pressure control device as claimed in claim 4, further comprising a volume control device for reducing the interior volume of said intermediate fluid reservoir (12) if said interior fluid pressure drops below the atmospheric pressure to maintain the interior fluid pressure at substantially the same level as the atmospheric pressure and for allowing said intermediate fluid reservoir (12) to recover its initial volume before the brake fluid flows back into the master cylinder reservoir through the master cylinder inlet port when the whole device is depressurized.

## Patentansprüche

1. Bremsdruckregeleinrichtung, bestehend aus:
einem Bremsdruckregelventil (5-1, 5-2) für Radbremsen, mit mindestens einem Überströmventil, wobei dieses Bremsdruckventil in einer Hauptleitung (3) vorgesehen ist, die sich von einem Hauptzylinder (1) zu den Radbremsen (4-1, 4-2) erstreckt;
einem Bremsflüssigkeitsspeicherbehälter (6) zur vorübergehenden Aufnahme der Bremsflüssigkeit, die durch das Überströmventil abfließt;
einer Pumpe (7), um die Bremsflüssigkeit aus dem Bremsflüssigkeitsspeicherbehälter (6) abzupumpen und zur Hauptleitung (3) zurückzuführen;
einer Versorgungsleitung (11), die von der Hauptleitung an einem Punkt oberhalb eines Rückflußpunktes (8) von der Pumpe (7) abzweigt und die sich bis zum Bremsflüssigkeitsspeicherbehälter (6) erstreckt;
einem Traktionssteuer-Umschaltventil (14, 17), um zu verhindern, daß während der Traktionssteuerung Bremsflüssigkeit von diesem Rückflußpunkt (8) zum Hauptzylinder (1) fließt und einem Absperrventil (13), um zu verhindern, daß Bremsflüssigkeit durch die Versorgungsleitung (11) vom Hauptzylinder (1) zum Bremsflüssigkeitsspeicherbehälter (6) fließt, wenn der Hauptzylinder (1) unter Druck steht;
**dadurch gekennzeichnet**, daß
das Absperrventil (13) in Form eines hubabhängigen Rückschlagventils vorliegt, um zu verhindern, daß Bremsflüssigkeit von der Versorgungsleitung (11) zum Bremsflüssigkeitsspeicherbehälter (6) fließt, wenn die Menge der Bremsflüssigkeit in diesem Speicherbehälter (6) einen vorherbestimmten Wert überschreitet.

2. Bremsdruckregeleinrichtung nach Anspruch 1, wobei die Versorgungsleitung und das Absperrventil (13) an solchen Stellen vorgesehen sind, daß sie immer mit der Hauptleitung in Verbindung stehen.

3. Bremsdruckregeleinrichtung nach Anspruch 1, wobei das Traktionssteuer-Umschaltventil (14) an einer Stelle vorgesehen ist, wo die Versorgungsleitung (11) von der Hauptleitung (3) abzweigt, und wobei dieses Umschaltventil in Form eines Ventils mit drei Öffnungen und zwei Ventilpositionen vorliegt zur selektiven Leitung des Flusses der Bremsflüssigkeit vom Hauptzylinder (1) zum Rückflußpunkt (8) von der Pumpe oder zur Versorgungsleitung (11), um die Verbindung der Versorgungsleitung (11) und des Absperrventils (13) mit der Hauptleitung zu unterbrechen, wenn dieses Traktionssteuer-Umschaltventil (14) in Ruhestellung ist.

4. Bremsdruckregeleinrichtung nach einem der Ansprüche 1-3, die außerdem einen Bremsflüssigkeits-Zwischenbehälter (12) aufweist, der an einem Punkt oberhalb des Absperrventils (13) vorgesehen ist, d.h. näher am Hauptzylinder (1) ist als dieses Absperrventil (13), wobei der Bremsflüssigkeits-Zwischenbehälter (12) so ausgebildet ist, daß er zumindest während der Traktionssteuerung mit der Versorgungsleitung (11) in Verbindung steht.

5. Bremsdruckregeleinrichtung nach Anspruch 4, die weiterhin eine Volumenregeleinrichtung aufweist, die das Innenvolumen des Bremsflüssigkeits-Zwischenbehälters (12) reduziert, wenn der innere Bremsflüssigkeitsdruck unter den atmosphärischen Druck absinkt, um den inneren Bremsflüssigkeitsdruck im wesentlichen auf Atmosphärendruckhöhe zu halten und um zu ermöglichen, daß der Bremsflüssigkeits-Zwischenbehälter (12) sein ursprüngliches Volumen wiedererlangt, bevor die Bremsflüssigkeit wieder durch die Einlaßöffnung des Hauptzylinders (1) in den Behälter für den Hauptzylinder zurückfließt, wenn der Druck in der ganzen Vorrichtung wieder abfällt.

## Revendications

1. Dispositif de commande de pression de fluide de freinage comprenant :
- une vanne (5-1, 5-2) de commande de pression de fluide pour frein de roue comprenant au moins une vanne de décharge et prévue dans un canal (3) principal hydraulique s'étendant depuis un maître cylindre (1) jusqu'aux freins (4-1, 4-2) de roue;
- un réservoir (6) de fluide de décharge destiné à stocker temporairement le fluide de freinage déchargé à partir de la vanne de décharge;
- une pompe (7) destinée à pomper le fluide de freinage à partir du dudit réservoir (6) de fluide de décharge et destinée à le renvoyer au canal hydraulique principal;
- un canal (11) d'alimentation de fluide se ramifiant à partir du canal principal hydraulique en un point amont d'un point (8) de retour de fluide depuis ladite pompe (7) et s'étendant vers le réservoir (6) de fluide de décharge;
- une vanne (14, 17) de commutation de commande de traction pour vérifier un flux de fluide s'écoulant depuis le point (8) de retour de fluide vers le maître-cylindre (1) au cours de la commande de traction: et
- une vanne (13) de coupure pour vérifier un flux de fluide s'écoulant depuis ledit maître-cylindre (1) jusqu'au réservoir (6) de fluide de décharge au travers dudit canal (11) d'alimentation en fluide lorsque la pression est appliquée sur le maître-cylindre (1);
caractérisée en ce que la vanne (13) de coupure prend la forme d'une vanne de vérification de type sensible à la course pour vérifier un flux de fluide s'écoulant depuis le canal (11) d'alimentation en fluide vers ledit réservoir (6) de fluide de décharge, si la quantité de fluide de freinage dans ledit réservoir (6) de fluide de décharge dépasse un niveau prédéterminé.

2. Dispositif de commande de pression de fluide de freinage selon la revendication 1, dans lequel ledit canal (11) d'alimentation en fluide et ladite vanne (13) de coupure sont prévus en une position telle que ce passage et cette vanne sont en permanence en relation avec ledit canal hydraulique principal.

3. Dispositif de commande de pression de fluide de freinage selon la revendication 1, dans lequel la vanne (14) de commutation de commande de traction est prévue en un lieu où le canal (11) d'alimentation en fluide se ramifie à partir du canal hydraulique (3) principal, ladite vanne de commutation étant de la forme d'une vanne à deux positions - trois orifices pour diriger sélectivement le flux de fluide à partir du maître-cylindre (1) vers ledit point (8) de retour de fluide à partir de ladite pompe ou vers le canal (11) d'alimentation en fluide, de manière à garder le canal (11) d'alimentation en fluide et la vanne (13) de coupure sans relation avec ledit canal principal hydraulique lorsque la vanne (14) de commutation de commande de traction est dans sa position de non-fonctionnement.

4. Dispositif de commande de pression de fluide de freinage selon l'une quelconque des revendications 1 à 3, comprenant en outre un réservoir (12) de fluide intermédiaire prévu en un emplacement en amont de ladite vanne (13) de coupure, c'est-à-dire, plus proche du maître-cylindre (1) que la vanne (13) de coupure, ledit réservoir (12) de fluide intermédiaire étant adapté pour communiquer avec le passage (11) d'alimentation en fluide au moins pendant la commande de traction.

5. Dispositif de commande de pression de fluide de freinage selon la revendication 4, comprenant en outre un dispositif de commande de volume pour réduire le volume intérieur du dudit réservoir (12) de fluide intermédiaire si la pression intérieure de fluide tombe au-dessous de la pression atmosphérique afin de maintenir la pression intérieure de fluide sensiblement au même niveau que la pression atmosphérique et pour permettre audit réservoir (12) de fluide intermédiaire de retrouver son volume initial avant le retour de fluide de freinage dans le réservoir de maître-cylindre à travers l'orifice d'entrée du maître-cylindre lorsque l'ensemble du dispositif est dépressurisé.
